# EUROPEAN PATENT APPLICATION

(11) **EP 3 581 014 A1**
(43) Date of publication of application: **18.12.2019**
(21) Application number: 19179209.2
(22) Date of filing: 09.06.2019
(51) Int. Cl.: A01D 34/83

(54) **BELT MOWER WITH TWO OPERATING ORIENTATIONS**

(30) Priority: 11.06.2018 US 201862683236 P; 10.08.2018 US 201862717374 P
(71) Applicant: Longarm IP Initiatives Inc., Calgary, Alberta T3G 5Y9 (CA)
(72) Inventor: Weber, Tory, Calgary, Alberta T3G 5Y9 (CA); Hagg, Gabriel, Calgary, Alberta T2V 1Y7 (CA)
(74) Representative: Franke, Dirk

(57) **Abstract**

A lawn mower includes a mower deck (12) supporting a mower belt (20) with cutting elements (22) thereon to produce a cutting action when the belt is driven by a motor (44) to rotate in an endless loop relative to the mower deck. A handle (54) is supported on the mower deck to be movable between different orientations. The mower belt extends along multiple sides (14, 16) of the mower deck which are different in configuration from one another to vary the cutting configuration of the mower as the handle is displaced between different orientations. In a preferred embodiment, the mower deck is triangular in shape and guard members (50) protrude outward from the sides of the deck over the cutting elements with transverse slots therein.

## Description

### FIELD OF THE INVENTION

The present invention relates to a belt mower comprising a mower deck supported for movement across ground having grass thereon, a belt rotatably supported on the mower deck, and a plurality of cutting elements protruding from the belt for cutting the grass as the belt is rotated.

### BACKGROUND

Use of cutting elements protruding from a rotating belt have been used in various forms of cutting implements such as a belt mower for mowing grass. Examples can be found in the following United States Patents: 4,267,686 by Heath; 4,418,519 by Fralish; 3,698,167 by Hurlburt et al; 2,867,069 by Ellis; 2,728,181 by Carpenter; 2,514,861 by Hackerott; 3,242,659 by Dunlap; 2,782,582 by McClearen; and 5,557,913 by Metz. The existing belt mower designs are typically limited to operation in a single configuration or orientation which provides limited access to smaller spaces and non-linear paths within an area to be mowed.

### SUMMARY OF THE INVENTION

According to one aspect of the invention there is provided a mower for mowing grass, the belt mower comprising:
a mower deck having a first side defining a maximum overall width of the mower deck and a second side oriented transversely to the first side so as to define a second overall width of the mower deck which is less than the maximum overall width;
a mower belt forming an endless loop and supporting a plurality of cutting elements thereon such that the cutting elements extend transversely outwardly from a common outer side of the belt;
a belt drive assembly including a plurality of pulleys rotatably supported on the bottom side of the mower deck and supporting the mower belt thereon such that the mower belt follows a belt path;
a motor coupled to the belt drive assembly to drive rotation of the belt such that the cutting elements effect a cutting action upon the grass;
an operator handle extending outwardly from the mower deck in a handle direction at an upward inclination from a bottom end of the operator handle coupled to the mower deck and a top end of the operator handle for gripping in hands of an operator;
the belt path including (i) a wide cutting section extending along the first side of the mower deck in which the cutting elements effect the cutting action along the wide cutting section, and (ii) a narrow cutting section extending along the second side of the mower deck in which the cutting elements effect the cutting action along the narrow cutting section; and
the operator handle being pivotal relative to the mower deck about an upright handle axis between a wide cutting orientation in which the operator handle is diametrically opposed from the wide cutting section of the belt path and a narrow cutting orientation in which the operator handle is diametrically opposed from the narrow cutting section of the belt path.

Providing an operator handle which can be pivoted in two different orientations relative to a more deck having two different lengths of cutting sections which can be interchangeably positioned at the leading side of the mower allows the mower to be optimized for maximum cutting with over large areas to be mowed and minimum cutting with over smaller areas between obstacles in the area to be mowed for example. Allowing the mower to be optionally supported for either multidirectional movement or guided linear movement by varying the configurations of the wheels supporting the mower deck allows obstacles in an area to be mowed to be yet further accommodated. Use of cutting elements supported on a belt together with the reconfigurable configuration of the mower deck orientation and rolling support for the mowing deck can provide the advantages of a lawnmower and a lawn trimmer together within a single implement.

In one embodiment, the mower may be supported for rolling across the ground primarily or entirely by wheels on the mower deck within the perimeter of the belt path. In this instance, the mower deck tends to remain fixed on the ground and the operator handle is rotated relative to the ground when pivoting the operator handle relative to the mower deck between the different cutting orientations.

In another embodiment, the mower may be supported for rolling across the ground primarily or entirely by wheels connected to the operator handle outside of the perimeter of the belt path. In this instance, the operator handle and the frame portion supporting the wheels thereon tend to remain fixed relative to the ground and it is the mower deck which is rotated relative to the ground when pivoting the operator handle relative to the mower deck between the different cutting orientations.

In yet a further embodiment, the mower may be supported for rolling across the ground by a combination of wheels within the perimeter of the mower deck which remain fixed in location relative to the mower deck, and wheels outside of the perimeter of the mower deck which remain fixed in location relative to the operator handle.

According to another important independent aspect of the present invention, the mower may include a plurality of deck wheels coupled to the mower deck and supporting the mower deck for rolling movement along the ground in which the wheels are multidirectional to allow for movement in any direction and are supported within a perimeter defined by the belt path, while the belt cutting path extends along the leading edge and both side edges of the mower deck for cutting in both forward and either lateral direction of the mower.

According to another important independent aspect of the present invention, a guard member may be supported on the mower deck for pivotal movement between a guard position protruding laterally outwardly from the mower deck overtop of one of the sections of the belt path such that the cutting elements along said one of the sections of the belt path are recessed inwardly relative to an outer edge of the guard member and a deflected position in which the guard member is displaced inwardly relative to the guard position such that the cutting elements along said one of the sections of the belt path protrude outwardly beyond the outer edge of the guard member.

According to another important independent aspect of the present invention, the mower deck may include a second belt forming an endless loop and supporting a plurality of cutting elements thereon in addition to the mower belt noted above, wherein the pulleys of the belt drive assembly support the second belt to follow the belt path of the mower belt in counter rotating relationship to the mower belt.

According to another important independent aspect of the present invention, each cutting element is elongate an elongate filament extending between a proximal end coupled to the mower belt and a distal end spaced from the mower belt in which the proximal end is releasably mounted on the mower belt so as to be readily interchangeable. In one example, the proximal end mates non-rotatably within a socket in the mower belt, and a threaded fastener is fastened through an aperture at an inner side of the belt into the proximal end of the cutting element. In a further example, the proximal end is enlarged in dimension relative to the filament for engaging an inner side of the belt while the filament extends through a corresponding aperture in the belt. In a further alternative arrangement, the proximal end of each cutting element may be received within a socket in the mower belt for pivotal movement between a first position in which the cutting element is axially removable from the socket and a second position in which the cutting element is axially retained within the socket.

According to another important independent aspect of the present invention, when each cutting element comprises an elongate filament having a main portion extending from the mower belt, the cutting element may further include a weighted end portion at the distal end of the main portion farthest from the mower belt which is increased in cross-sectional dimension relative to the main portion.

The cutting elements may be linear in shape, or alternatively, may be formed with a variety of non-linear shapes at the distal end, the proximal end or anywhere along the filament.

According to another important independent aspect of the present invention there is provided a belt mower for mowing grass, the belt mower comprising:
a mower deck;
a mower belt forming an endless loop and supporting a plurality of cutting elements thereon such that the cutting elements extend transversely outwardly from a common outer side of the belt;
a belt drive assembly including a plurality of pulleys rotatably supported on the bottom side of the mower deck and supporting the mower belt thereon such that the mower belt follows a belt path;
a motor coupled to the belt drive assembly to drive rotation of the belt such that the cutting elements effect a cutting action upon the grass;
an operator handle extending outwardly from the mower deck in a rearward direction at an upward inclination from a bottom end of the operator handle coupled to the mower deck and a top end of the operator handle for gripping in hands of an operator;
the belt path including a first forward cutting section extending along a first portion of a front side of the mower deck opposing the operator handle and a second forward cutting section extending along a second portion of the front side of the mower deck;
the first and second forward cutting sections being linear and meeting one another at apex defining an acute interior angle between the first and second forward cutting sections.

The first and second forward cutting sections may collectively span a full width of the mower in a lateral direction perpendicular to the rearward direction of the handle.

When a guard member protrudes outwardly from the mower deck overtop of one of the sections of the belt path such that the cutting elements along said one of the sections of the belt path are recessed inwardly relative to an outer edge of the guard member, preferably a plurality of elongate slots are formed in the guard member which are oriented in a forward working direction of the mower and which are open to the outer edge of the guard member.

A plurality of wheels are preferably coupled to the mower deck such that each of the wheels is supported in trailing relationship to a pair of boundary lines defined by the first and second forward cutting sections.

According to another important independent aspect of the present invention there is provided a belt mower for mowing grass, the belt mower comprising:
a mower deck;
a mower belt forming an endless loop and supporting a plurality of cutting elements thereon such that the cutting elements extend transversely outwardly from a common outer side of the belt;
a belt drive assembly including a plurality of pulleys rotatably supported on the bottom side of the mower deck and supporting the mower belt thereon such that the mower belt follows a belt path;
a motor coupled to the belt drive assembly to drive rotation of the belt such that the cutting elements effect a cutting action upon the grass;
an operator handle extending outwardly from the mower deck in a rearward direction at an upward inclination from a bottom end of the operator handle coupled to the mower deck and a top end of the operator handle for gripping in hands of an operator;
a guard member protruding laterally outwardly from the mower deck overtop of a portion of the belt path such that the cutting elements along said portion of the belt path are recessed inwardly relative to an outer edge of the guard member, the guard member including a plurality of elongate slots formed therein which are oriented transversely to the belt path and which are open to the outer edge of the guard member.

According to a further aspect of the present invention there is provided a belt mower for mowing grass, the belt mower comprising:
a mower deck having a first side and a second side which is different in configuration from the first side;
a mower belt forming an endless loop and supporting a plurality of cutting elements thereon such that the cutting elements extend transversely outwardly from a common outer side of the belt;
a belt drive assembly including a plurality of pulleys rotatably supported on the bottom side of the mower deck and supporting the mower belt thereon such that the mower belt follows a belt path;
a motor coupled to the belt drive assembly to drive rotation of the belt such that the cutting elements effect a cutting action upon the grass;
an operator handle extending rearwardly from the mower deck in a handle direction at an upward inclination from a bottom end of the operator handle coupled to the mower deck to a top end of the operator handle for gripping in hands of an operator;
the belt path including (i) a first cutting section extending along the first side of the mower deck, and (ii) a second cutting section extending along the second side of the mower deck such that the first and second cutting sections have a different cutting configuration; and
the operator handle being pivotal relative to the mower deck about a handle axis between a first cutting orientation in which the first cutting section is opposite from the operator handle and a second cutting orientation in which the second cutting section is opposite from the operator handle.

In some embodiments, the first side and the second side of the mower deck have different widths and define different cutting width of the mower in the first and second cutting orientations respectively.

Preferably the handle axis about which the operator handle is pivotal between the first and second cutting orientations is an upright axis.

In one embodiment, the first side of the mower deck and a corresponding portion of the belt path along the first side of the mower deck comprise a first forward cutting section extending along a first portion of a first side of the mower deck and a second forward cutting section extending along a second portion of the first side of the mower deck, in which the first and second forward cutting sections are linear and meet one another at apex defining an acute interior angle between the first and second forward cutting sections, and in which the second side of the mower deck is generally linear such that the belt path is generally triangular in shape.

In another embodiment, (i) the first side of the mower deck defines a maximum overall width of the mower deck in the first cutting orientation and the second side of the mower deck is oriented transversely to the first side so as to define a second overall width of the mower deck in the second cutting orientation which is less than the maximum overall width; (iii) the belt path including (i) a wide cutting section extending along the first side of the mower deck in which the cutting elements effect the cutting action along the wide cutting section, and (ii) a narrow cutting section extending along the second side of the mower deck in which the cutting elements effect the cutting action along the narrow cutting section; and (iii) the handle axis comprising an upright axis such that the handle is pivotal between a wide cutting orientation corresponding to the first cutting orientation in which the operator handle is diametrically opposed from the first cutting section that defines a wide cutting section of the belt path and a narrow cutting orientation corresponding to the second cutting orientation in which the operator handle is diametrically opposed from the second cutting section defining a narrow cutting section of the belt path. In this instance, the first side and the second side of the mower deck are perpendicular relative to one another and adjacent to one another such that the operator handle is rotated about the handle axis through 90 degrees between the wide cutting orientation and the narrow cutting orientation.

In any of the above noted embodiments, the motor may include a rotary output coupled to the belt drive assembly which is rotatable about the upright handle axis about which the operator handle is pivoted in which the motor is pivotal together with the operator handle relative to the mower deck between the first cutting orientation and the second cutting orientation.

In any of the above noted embodiments, a plurality of auxiliary wheels may be coupled to the operator handle outside of a perimeter defined by the belt path such that the mower deck is pivotal about the upright axis relative to both the auxiliary wheels and the operator handle between the first and second cutting orientations. In this instance, a latching mechanism may be associated with each auxiliary wheel which is operable between a latched position in which the auxiliary wheel is supported for rolling movement in the handle direction and an unlatched position in which the auxiliary wheel is freely pivotal about a respective upright wheel axis for rotation in any direction.

In any of the above noted embodiments, a guard member may be supported on the mower deck for pivotal movement between a guard position protruding laterally outwardly from the mower deck overtop of one of the sections of the belt path such that the cutting elements along said one of the sections of the belt path are recessed inwardly relative to an outer edge of the guard member and a deflected position in which the guard member is displaced inwardly relative to the guard position such that the cutting elements along said one of the sections of the belt path protrude outwardly beyond the outer edge of the guard member.

In any of the above noted embodiments, a second belt may be provided forming an endless loop and supporting a plurality of cutting elements thereon, in which the pulleys of the belt drive assembly support the second belt to follow the belt path of the mower belt in counter rotating relationship to the mower belt.

In any of the above noted embodiments, the cutting elements may be releasably mounted on the mower belt so as to be readily interchangeable. In one example, each cutting element may be elongate between a proximal end coupled to the mower belt and a distal end spaced from the mower belt, wherein the proximal end mates non-rotatably within a socket in the mower belt, and wherein a threaded fastener is fastened through an aperture at an inner side of the belt into the proximal end of the cutting element. In another example, each cutting element may be an elongate filament extending between a proximal end coupled to the mower belt and a distal end spaced from the mower belt, in which the proximal end is enlarged in dimension relative to the filament for engaging an inner side of the belt while the filament extends through a corresponding aperture in the belt. In a further example, each cutting element may be elongate between a proximal end coupled to the mower belt and a distal end spaced from the mower belt, in which the proximal end is received within a socket in the mower belt for pivotal movement between a first position in which the cutting element is axially removable from the socket and a second position in which the cutting element is axially retained within the socket.

Each cutting element comprises an elongate filament having a main portion and a weighted portion at a distal end of the main portion farthest from the mower belt which is increased in cross-sectional dimension relative to the main portion.

In any of the above noted embodiments, the mower may further comprise a guard member protruding laterally outwardly from the mower deck overtop of one of the sections of the belt path such that the cutting elements along said one of the sections of the belt path are recessed inwardly relative to an outer edge of the guard member, the guard member including a plurality of elongate slots formed therein which are oriented transversely to the belt path and which are open to the outer edge of the guard member.

In any of the above noted embodiments, the mower may further comprise a plurality of deck wheels coupled to the mower deck within a perimeter defined by the belt path and supporting the mower deck for rolling movement along the ground in which the wheels are multidirectional to allow for movement in any direction and in which the belt cutting path extends about a perimeter of the mower deck for cutting in both forward and either lateral direction of the mower.

### BRIEF DESCRIPTION OF THE DRAWINGS

Various embodiments of the invention will now be described in conjunction with the accompanying drawings in which:
Figure 1 is an isometric view of a first embodiment of the mower;
Figure 2 is an isometric view of the mower according to the first embodiment of figure 1 including guard members supported thereon in a guard position;
Figure 3 is an isometric view of the mower according to the first embodiment of figure 1 including guard members supported thereon in a deflected position;
Figure 4 is an isometric view of the mower according to the first embodiment of figure 1 in a wide cutting orientation;
Figure 5 is an isometric view of the mower according to the first embodiment of figure 1 illustrating displacement of the mower deck from the wide cutting orientation to the narrow cutting orientation;
Figure 6 is an isometric view of the mower according to the first embodiment of figure 1 in a narrow cutting orientation;
Figure 7 is schematic representation of the belt drive assembly of the mower according to the first embodiment of figure 1;
Figure 8 is a schematic representation of an alternative embodiment of the mower including a second mower belt counter-rotating relative to the primary mower belt;
Figure 9 is a schematic representation of one embodiment of the cutting elements;
Figure 10 is a schematic representation of an alternative embodiment of the cutting elements;
Figure 11 is a side elevational view of a second embodiment of the mower;

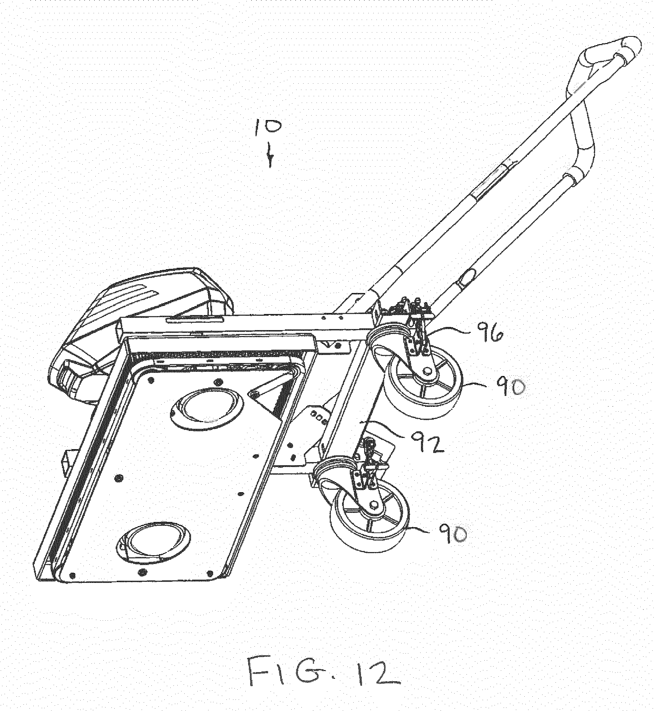

Figure 12 is a perspective view of a bottom of the mower according to the second embodiment of figure 11;

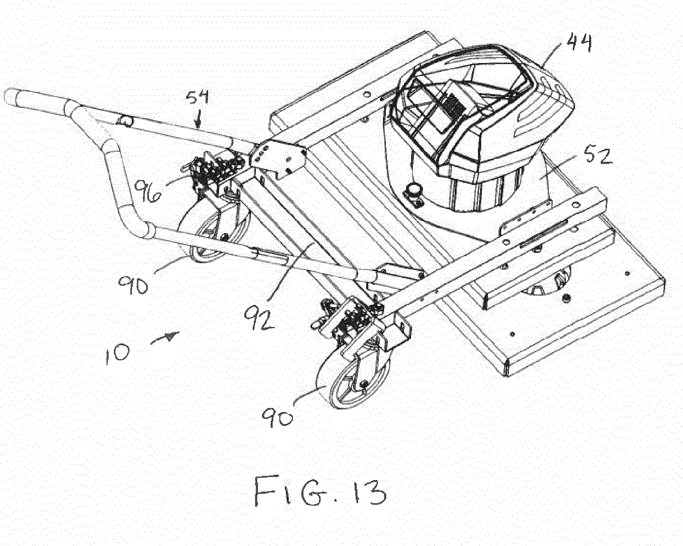

Figure 13 is a perspective view of a top of the mower according to the second embodiment of figure 11;

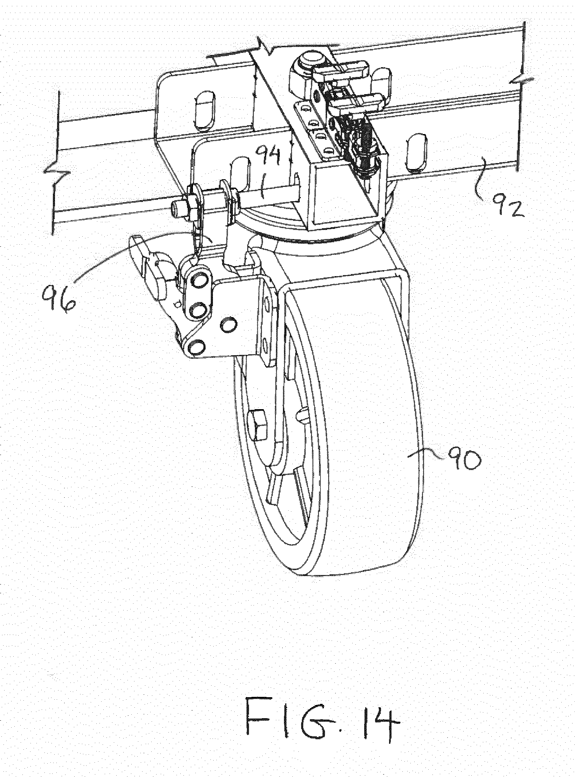

Figure 14 is an enlarged perspective view of one of the rear wheels of the mower according to the second embodiment of figure 11;
Figure 15 is a top plan view of a further embodiment of the mower;
Figure 16 is a side elevational view of the embodiment of the mower according to figure 15;
Figure 17 is a perspective view of a further embodiment of the mower which is similar to the embodiment of Figure 11, but with the addition of slotted guard members;
Figure 18 is a front elevational view of a further embodiment of the mower;
Figure 19 is a rear perspective view of the embodiment of the mower according to Figure 18;
Figure 20 and Figure 21 are side elevational and top plan views of the embodiment of the mower according to Figure 18; and
Figure 22A and 22B perspective views of the embodiment of the mower according to Figure 18 in which the guard member is in a normal position and in a deflected position respectively.

In the drawings like characters of reference indicate corresponding parts in the different figures.

### DETAILED DESCRIPTION

Referring to the accompanying figures there is illustrated a belt mower generally indicated by reference numeral 10. The belt mower 10 is supported for movement across a ground surface upon which grass grows, for cutting the grass.

Although various embodiments are shown in the accompanying figures, the features in common with the various embodiments will first be described.

The mower includes a mower deck 12 comprising a rectangular housing having two longitudinal sides 14 which define a maximum dimension or maximum overall width of the mower deck along two opposing edges of the housing, and two lateral sides 16 connecting perpendicularly between the longitudinal sides 14 at opposing ends thereof so as to define a second overall width of the housing in a direction perpendicular to the maximum overall width defined by the longitudinal sides 14.

The mower deck 14 is supported on a plurality of wheels; however, the place of the wheels and the configuration of the wheels may vary among the different embodiments as described below.

A mower belt 20 is supported on the mower deck which carries a plurality of cutting elements 22 thereon for cutting the grass as the belt is rotated relative to the deck. More particularly the mower belt comprises an endless loop in which the cutting elements comprise individual elongate members which protrude perpendicularly outwardly from a common outer side of the belt 20. Each cutting element 22 is elongate between a proximal and 24 coupled to the belt and a distal end 26 spaced apart from the belt.

A belt drive assembly 28 supports the mower belt 20 on the mower deck for rotating the belt along a prescribed belt path which is generally rectangular in shape about the full perimeter of the mower deck. In this instance the belt drive assembly includes four belt pulleys 30 mounted on the bottom of the mower deck at the four corners of the rectangular shape of the housing to define the rectangular belt path. More particularly the belt path includes two wide cutting sections 32 extending along each of the longitudinal sides 14 of the mower deck and two narrow cutting sections 34 extending along each of the two lateral sides 16 of the mower deck.

The belt drive assembly further includes a driven gear 36 mounted above each belt pulley 30 so as to be coaxial with the respective pully and rotatable together with the pulley about a respective upright axis. A drive belt 38 transfers drive from a central drive gear 40 to the driven gears 36. The central drive gear 40 is mounted at the bottom end of a rotary output shaft 42 of a suitable drive motor 44 mounted above the lower deck 12. The rotary output 42 rotates about a vertical axis at the centre of the mower deck.

The belt drive assembly further includes two idler gears 46 mounted at an intermediate location along one of the longitudinal sides 14 of the mower deck. The drive belt 38 follows a respective drive belt path so as to communicate with each of the driven gears 36, the drive gear 40, and both idler gears 46. More particularly the drive belt path includes a main portion which extends about the full perimeter of the mower deck to communicate with the four driven gears 36 and the two idler gears 46 and a secondary portion between the two idler gears which extends from the idler gears to the central drive gear 40 therebetween. In this manner, rotation of the rotary output shaft 42 of the motor drives the central drive gear which in turn transmits the drive rotation through the drive belt to the driven gears 36 which directly turn the belt pulleys 30.

The location of the mower belt in close proximity to the perimeter of the mower deck ensures that the cutting elements 22 protrude horizontally outward beyond the corresponding edges of the mower deck about the full perimeter thereof.

To prevent injury to an operator, a set of four guard members 50 are provided along each of the four sides of the rectangular shape of the mower deck respectively. Each guard member thus spans the full length of a respective side of the mower deck and a respective cutting section of the mower belt. Each guard member comprises a rigid panel of material which is hinged along an inner edge to the corresponding edge of the mower deck such that the guard member is pivotal about a horizontal axis between a guard position covering the cutting elements along a respective section of the more belt and a deflected position in which the corresponding cutting elements are substantially uncovered by the guard member.

In the guard position, the guard member protrudes horizontally outward beyond the distal ends of the cutting elements such that the cutting elements are recessed inwardly relative to the outer edge of the guard member. In the deflected position, the guard member is pivoted upwardly and inwardly relative to the mower deck such that the cutting elements protrude outwardly beyond the outer edge of the guard member.

Each guard member includes a first portion extending generally horizontally outward in the guard position, and a second portion which is oriented transversely to the first portion to extend downwardly and be more vertical in orientation than the first portion in the guard position. The guard members are movable independently of one another between the respective guard positions and deflected positions thereof.

The mower 10 further includes an upper housing 52 which is mounted on the top side of the mower deck 12 so as to be pivotal relative to the mower deck about an upright axis which is coaxial with the rotary output shaft of the motor and the central drive gear 40 supported thereon. The drive motor 44 in this instance is supported on the upper housing 52 such that the motor and housing are pivotal together relative to the mower deck supporting the mower belt thereon.

An operator handle 54 is also coupled to the upper housing 52 for pivotal movement together with the upper housing and the mower about the upright axis relative to the mower deck. The operator handle 54 comprises two arms 56 coupled at respective bottom ends to the upper housing 52 at opposing sides of the drive motor 44 received therebetween. The two arms 56 extend outward from the mower deck in a handle direction at an upward inclination towards respective top ends which are joined by a crossbar 58.

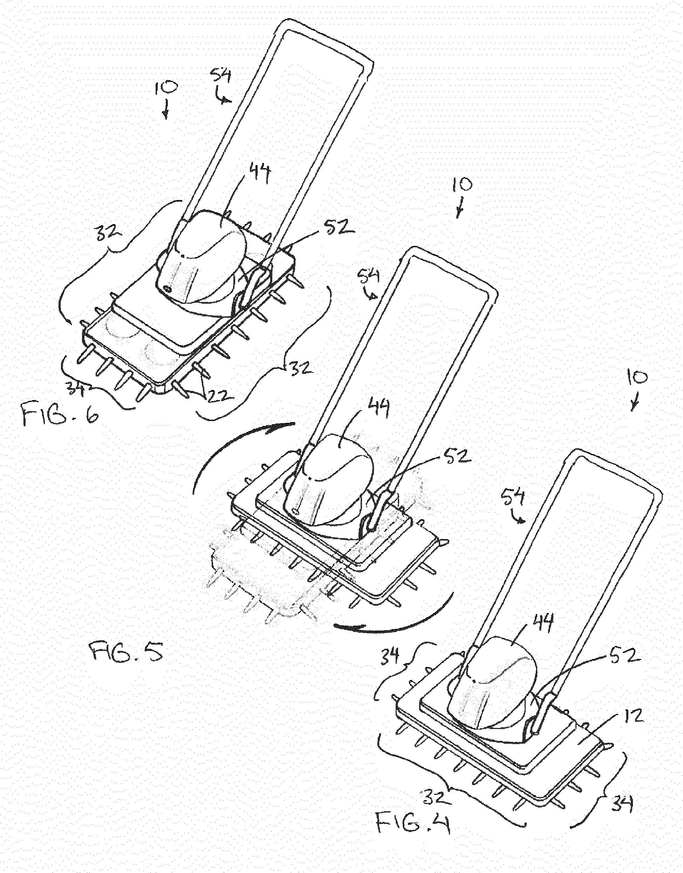

The operator handle can be used to pivot the upper housing 52 relative to the mower deck 12 through a range of approximately 90° between a wide cutting orientation shown in figure 4 and a narrow cutting orientation shown in figure 6. In the wide cutting orientation of figure 4, one of the longitudinal sides 14 forms a leading edge of the mower diametrically opposite from the operator handle 54 extending rearward in the handle direction such that one of the wide cutting sections 32 of the mower belt is arranged along the front edge of the mower and the longitudinal side 14 defines the maximum overall width of the mower perpendicular to the forward working direction. In the narrow cutting orientation of figure 6, one of the lateral sides 16 forms a leading edge of the mower diametrically opposite from the operator handle 54 extending rearward in the handle direction such that one of the narrow cutting sections 34 of the mower belt is arranged along a front edge of the mower in the lateral side 16 and defines the overall width of the mower perpendicular to the forward working direction.

In either orientation of the handle, the four cutting sections of the mower belt span the forward leading edge of the mower, the rear trailing edge of the mower, and both laterally opposed sides of the mower such that the mower can cut in any direction of movement permitted by the wheels which support the mower for rolling movement across the ground.

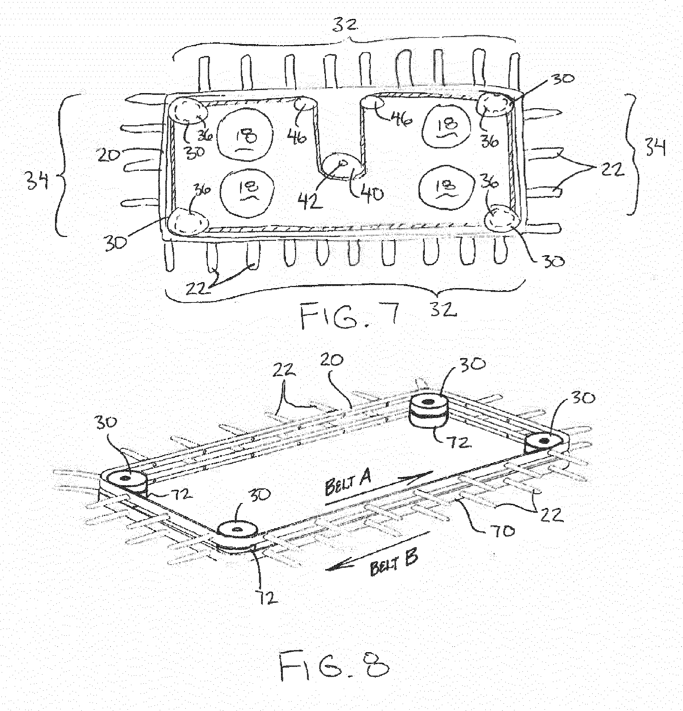

In an alternative embodiment of the mower belt shown in figure 8, a second mower belt 70 may be provided in addition to the first mower belt 20 described above in which the second mower belt is identical in configuration to the first mower belt. A second pulley 72 is located coaxially with each of the primary belt pulleys 30 at the four corners of the deck housing in which each second pulley 72 is geared to counter-rotate relative to the respective primary belt pulley 30. Accordingly, the set of secondary pulleys 72 support the secondary mower belt 70 for rotation in a plane immediately below the plane of the mower belt and so as to counter-rotate in the opposing direction relative to the main mower belt 20.

The cutting elements 22 may assume a variety of shapes and configurations. Although the various embodiments shown are all generally linear in shape along the length thereof between the proximal and distal ends, in further embodiments, the cutting elements may be formed with a variety of non-linear shapes at the distal end, the proximal end or anywhere along the filament.

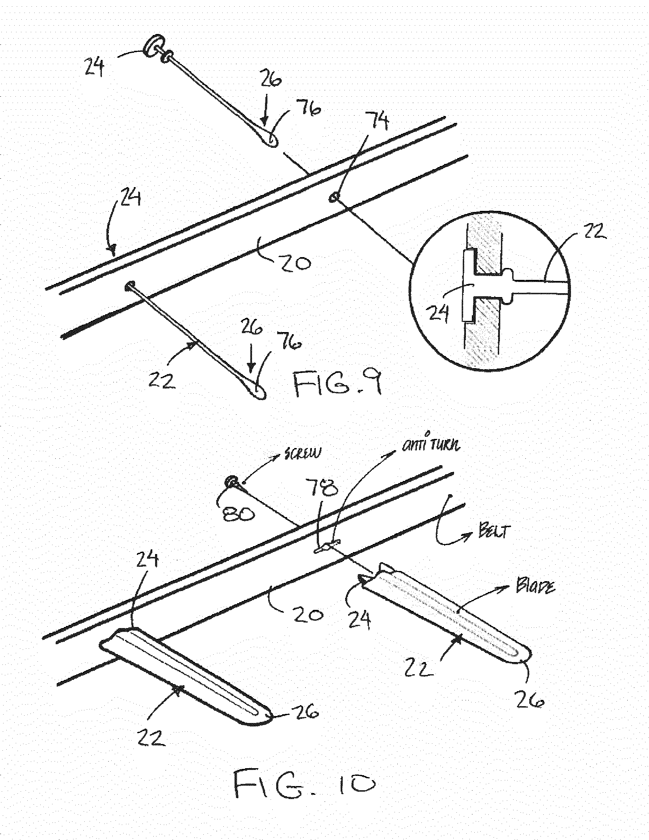

As shown in figure 9, according to a first embodiment of the cutting elements 22, each cutting element may comprise an elongate filament which is enlarged in dimension at the proximal end thereof such that the main filament portion can be threaded through a corresponding aperture 74 in the mower belt while the enlarged proximal end cannot pass through the apertures 74 and is instead retained against the inner side of the belt. The distal end of the filament may also be enlarged in dimension relative to the main portion of the filament so as to define a weighted portion 76 which adds tension to the filament to maintain the filament more rigidly in a linear orientation due to the centrifugal forces acting on the weighted portion 76 as the belt is rotated about the pulleys.

In further embodiments, the mower deck may have an oval or circular perimeter shape with the belt path being similarly oval or circular in shape about the perimeter of the mower deck so as to optimize tension induced in the filaments about the full belt path instead of concentrating the benefits of the centrifugal forces at the corners of the rectangular belt path shown in the accompanying figures.

Turning now to figure 10, the cutting elements may instead each comprise a flat blade in profile having a proximal end which mates non-rotatably within a respective socket 78 formed in the belt. The proximal end of the cutting element may be retained in the socket within the belt in this instance by a screw 80 which is threaded through an aperture at the inner side of the belt such that the head of the screw abuts the inner side of the belt while the threaded portion of the screw is inserted through the belt and is threaded into the proximal end of the cutting element.

In yet a further embodiment of the cutting elements (not shown), each cutting element may include a proximal end which is shaped to mate with a corresponding socket in the belt which is configured such that the proximal end of the cutting element can be rotated once penetrated into the socket between a locked position in which the cutting element is axially retained within the socket and an unlocked position in which the cutting element is axially removable from the socket.

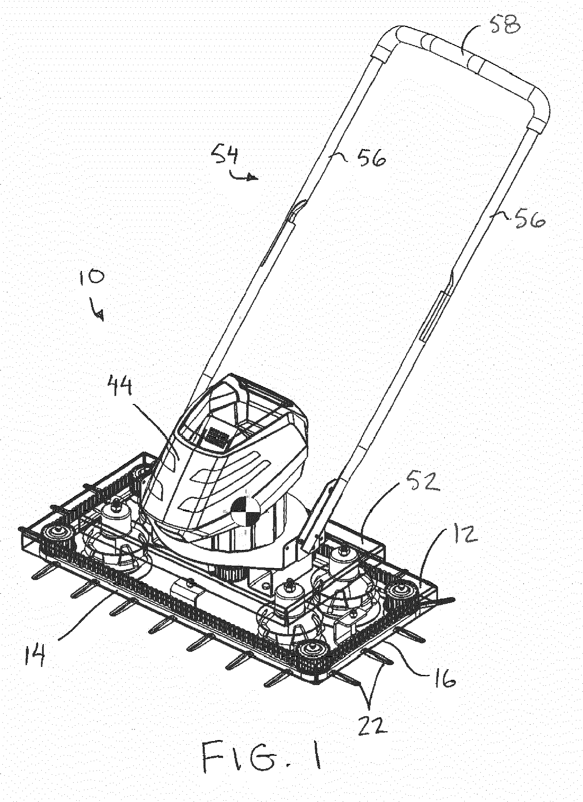

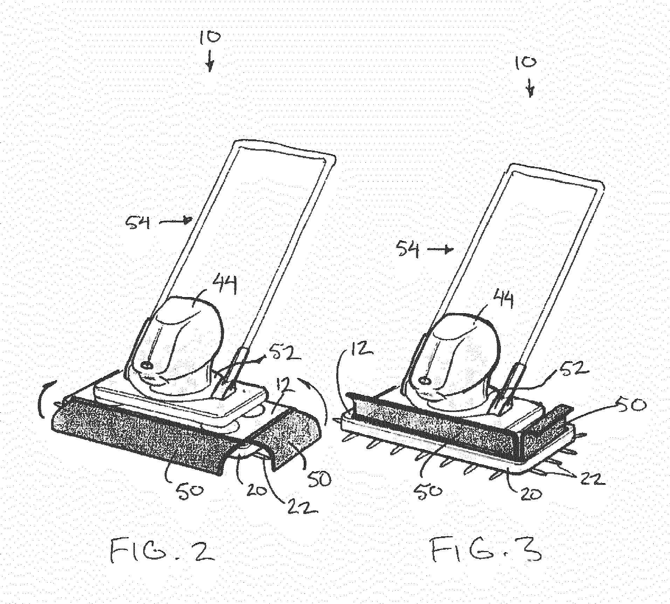

Turning now more particularly to the first embodiment of figures 1 through 7, the mower is supported for rolling across the ground entirely by deck wheels 18 on the mower deck within the perimeter of the belt path. In this instance, the mower deck tends to remain fixed on the ground and the operator handle tends to be rotated relative to the ground when pivoting the operator handle relative to the mower deck between the different cutting orientations.

In the illustrated example, the deck wheels 18 are spherical in shape so as to be suited for rolling in any direction over the ground; however, any other design which allows multi-directional movement would be suitable. Each spherical deck wheel 18 is supported within a respective bearing housing on the bottom side of the mower deck.

The deck wheels 18 as illustrated are suited to be positioned at an intermediate location on the bottom of the mower deck within the interior of the drive belt path and mower belt path; however, the deck wheels 18 may also be positioned outside the belt path while remaining fixed relative to the mower deck.

When the deck wheels 18 are the only wheels supporting the more deck for rolling movement on the ground, the deck wheels 18 comprise a set of four wheels located in a rectangular configuration adjacent the four corners of the mower deck respectively.

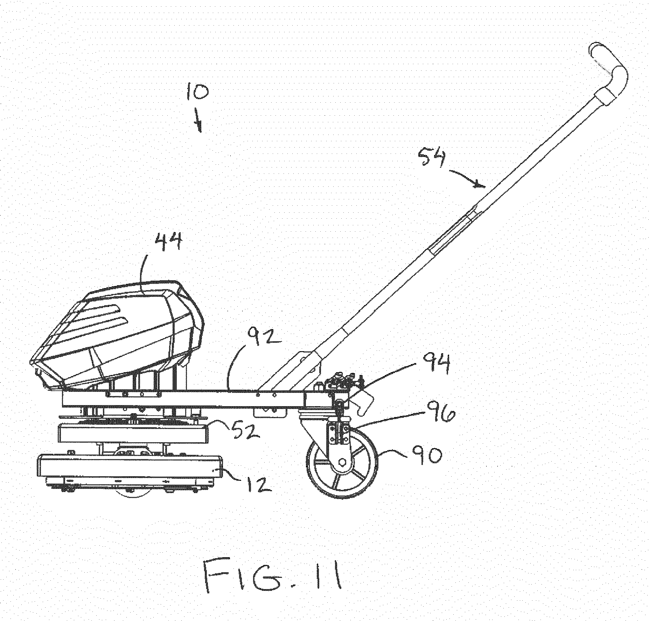

Turning now to the alternative embodiment shown in figure 11, in this instance, the mower is supported for rolling across the ground partly by a set of two of the deck wheels 18 similar to the deck wheels described above, and partly by a set of auxiliary wheels connected to the operator handle outside of the perimeter of the belt path.

More particularly, the auxiliary wheels comprise a set of two rear wheels 90 provided on a rear frame 92 extending rearwardly from the upper housing 52 of the mower in the handle direction below the operator handle 54. The two rear wheels are laterally spaced apart on the rear frame in a direction which is perpendicular to the handle direction at a suitable elevation so that the rear wheels engage the ground and support the mower deck for rolling movement on the ground together with the deck wheels when the deck is in a horizontal orientation. In this instance only two deck wheels are provided on the mower deck within the interior of the belt path while still providing sufficient stability to the mower deck. In this instance the rear wheels together with the rear frame 92 upon which they are supported pivot together with the operator handle and the upper housing 52 about the upright axis relative to the mower deck between the wide cutting and narrow cutting orientations.

Each rear wheel 90 comprises a caster wheel which is pivotal relative to the rear frame about a vertical wheel axis so as to be oriented for rolling along the ground in any direction. A suitable latching mechanism is associated with each rear wheel which is operable between an unlocked position in which the rear wheel is freely pivotal about the upright axis for rolling in any direction, and a latched position in which the orientation of the respective rear wheel is fixed for rolling movement in the handle direction of the operator handle. In the illustrated embodiment, the latching mechanism comprises a latch pin 94 supported on a lever 96 which is pivotally supported on a bracket portion of the rear wheel which pivots together with the rear wheel relative to the rear frame 92. The lever pivots between the unlatched position in which the latch pin 94 is disengaged from the rear frame and the latched position in which the latch pin 94 is aligned with and received matingly within a respective aperture on the rear frame to lock the orientation of the rear wheel relative to the rear frame.

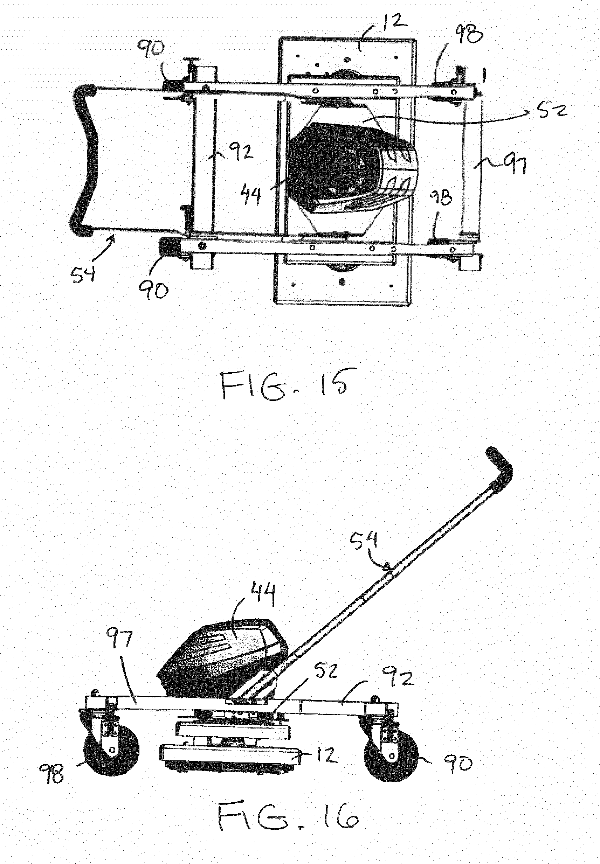

Turning now to a further embodiment shown in Figures 15 and 16, the mower in this instance is supported for rolling movement across the ground entirely by auxiliary wheels connected to the operator handle outside of the perimeter of the belt path. More particularly, in addition to the rear wheels 90 on the rear frame 92 as noted above in regards to the previous embodiment, the embodiment of figures 15 and 16 further includes a forward frame 97 on the upper housing 52 to support front wheels 98 thereon. The forward frame 97 extends forwardly from the upper housing 52, diametrically opposite to the rear frame that extends in the handle direction so as to be coupled in fixed relation to the rear frame 94. In this instance, the operator handle and the frame portion supporting both the front wheels and the rear wheels thereon tends to remain fixed relative to the ground and it is the mower deck which is rotated relative to the ground when pivoting the operator handle relative to the mower deck between the different cutting orientations.

The two front wheels 98 are laterally spaced apart on the forward frame 97 in a direction which is perpendicular to the handle direction at a suitable elevation so that the front wheels engage the ground and support the mower deck for rolling movement on the ground together with the rear wheels when the deck is in a horizontal orientation.

Similarly to the rear wheels, each front wheel 98 comprises a caster wheel which is pivotal relative to the forward frame about a vertical wheel axis so as to be oriented for rolling along the ground in any direction. A suitable latching mechanism is associated with each front wheel which is operable between an unlocked position in which the front wheel is freely pivotal about the upright axis for rolling in any direction, and a latched position in which the orientation of the respective front wheel is fixed for rolling movement in the handle direction of the operator handle. In the illustrated embodiment, the latching mechanism comprises a latch pin 94 supported on a lever 96 which is pivotally supported on a bracket portion of the front wheel which pivots together with the front wheel relative to the forward frame 97. The lever pivots between the unlatched position in which the latch pin 94 is disengaged from the front frame and the latched position in which the latch pin 94 is aligned with and received matingly within a respective aperture on the front frame to lock the orientation of the front wheel relative to the forward frame.

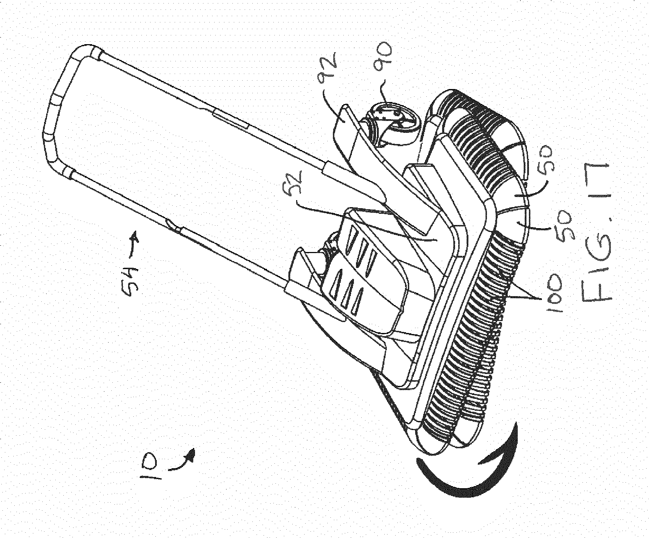

Turning now to the embodiment of figure 17, the mower 10 in this instance is configured substantially identically to the embodiment of figure 11 with the exception of the configuration of the guard members 50 and the general shape of the housing and rear frame 92. The guard members are again provided along each section of the belt path so as to be movable between a working orientation and an upwardly and inwardly deflected orientation enabling the cutting elements to cut closer to obstacles. The guard members differ from the previous embodiments in that each guard member is provided with a plurality of elongate slots 100 formed therein which extend inwardly from an open end at the outer edge of the guard member. The slots are parallel to one another and perpendicular to the belt path on all four sides such that the slots along the front side of the mower are always oriented in the forward working direction of the mower regardless of the mower deck being in the wide or narrow configuration.

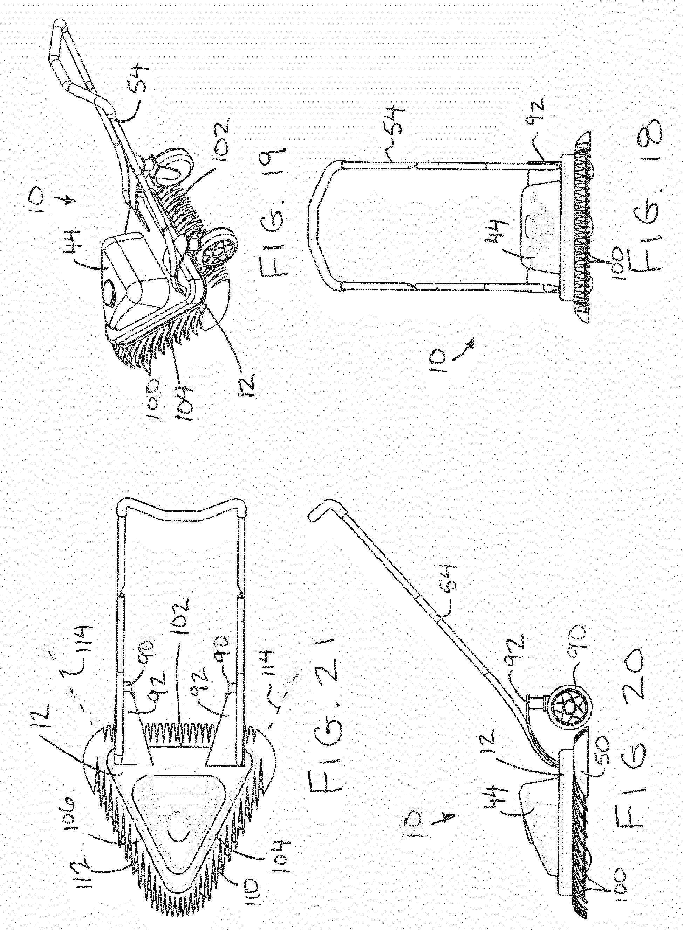

Turning now to the embodiment of figures 18 through 22, the mower deck in this instance is generally triangular in shape having a rear side 102 oriented perpendicularly to the forward working direction at the trailing side of the deck, a first front linear side 104 extending forwardly from one end of the rear side 102 and a second front linear side 106 extending forwardly from the other end of the rear side. Both front linear sides extend forwardly and inwardly towards one another to be joined at a forward apex of the mower deck. In this manner the first and second front linear sides collectively span the full lateral width across the front of the mower deck while meeting at an acute interior angle at the apex at a location which is laterally centered relative to the mower deck. Similar to previous embodiments, the belt drive assembly using pulleys connected to a drive motor supports the mower belt 20 for rotation along a belt path following the perimeter shape of the mower deck so that the cutting elements 22 extending outwardly from the belt produce a cutting action when the belt is rotated.

The belt path in this instance includes three sections presented as a rear cutting section 108 extending along the rear side 102 of the deck, and corresponding first and second forward cutting sections 110 and 112 extending along the first and second front linear sides 104 and 106 respectively which collectively define a front side of the deck in the configuration shown in the Figures. In this manner, the first and second forward cutting sections are continuous with one another to meet at the forward apex at the same acute interior angle defined by the front sides of the mower deck. The rear cutting section is laterally oriented so as to be perpendicular to the forward working direction of the mower and the rearward direction that the handle extends from the housing of the mower.

Similar to previous embodiments, the mower deck is supported for rolling movement along the ground by one or more deck wheels 18 supported on the bottom side of the mower deck within the perimeter of the belt path and a pair of rear wheels 90 supported on a rear frame extending rearward from the mower deck so that the rear wheels are positioned laterally spaced apart from one another rearwardly of the rear cutting section 108 at a lateral distance which is less than the overall width of the mower that the rear cutting section 108 spans.

As shown in figure 21, all of the wheels are supported in a trailing relationship relative to a boundary defined by two imaginary boundary lines 114 that are co-linear with the first and second forward cutting sections 110 and 112 respectively. In this manner, the wheels do not interfere with the apex at the front end of the mower reaching into narrow corners in a yard being mowed.

The guard members 50 in this instance again are formed so that a single guard member spans each straight side of the mower deck or each linear section of the belt path respectively. As in previous embodiments, each guard member may be hinged on the mower deck for pivotal movement upwardly and inwardly from a working orientation to a deflected orientation which enables trimming closer to obstacles.

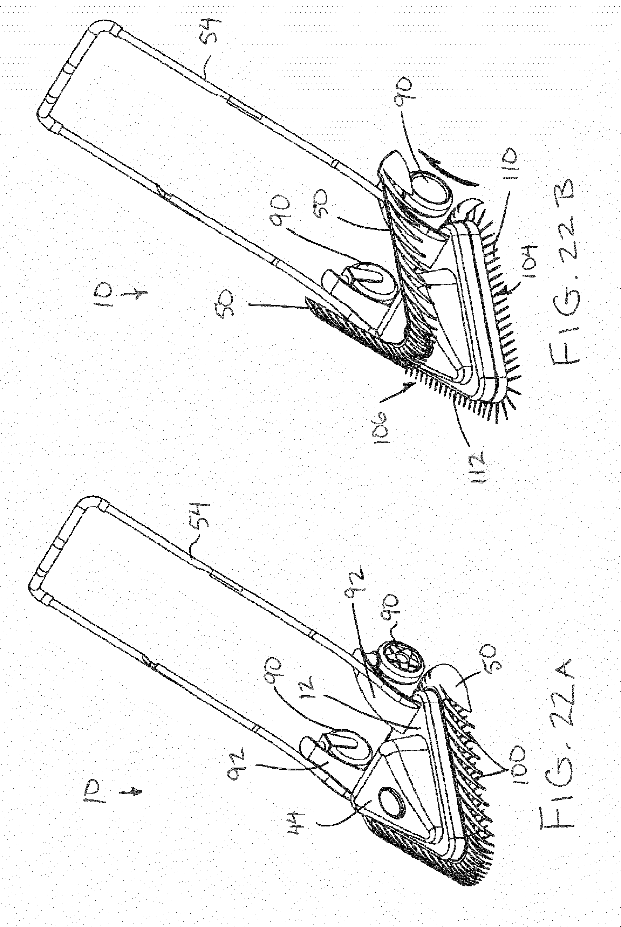

Alternatively, as shown in figures 22A and 22B the two guard members 50 along both forward cutting sections of the belt path may be coupled as a single unitary structure which is pivoted upwardly and rearwardly from the working position by a set of link members coupled between the guard members and the mower deck to function as a four bar hinge. The rear guard member may be fixed in orientation relative to the mower in this instance is the obstruction of the rear wheels provide no incentive to deflect the rear guard member away from the normal working orientation.

The guard members 50 are again provided with a plurality of elongate slots 100 in which the slots are parallel to one another and evenly spaced apart along each of the linear sections of the guard members 50. The slots 100 are arranged to be open to the outer edge of the guard member. In the illustrated embodiment all of the slots 100 are oriented to extend inwardly from the outer edge of the guard member in a direction which is parallel to the forward working direction of the mower and parallel to the rear direction that the handle 54 extends from the mower deck.

In the embodiment of Figures 18 to 22, the handle may be fixed in the orientation shown. Alternatively, the handle may be pivotal with the motor on the upper portion of the mower relative to the mower deck defining the triangular shape of the cutting path about an upright handle axis between a first cutting orientation and a second cutting orientation similarly to the previous embodiments. The first cutting orientation is shown in Figures 18 to 22 in which the apex between the first and second forward cutting sections 110 and 112 is diametrically opposite from the handle. In the second cutting orientation, the rear side 108 of the mower deck is diametrically opposite from the handle relative to the upright handle axis such that the leading front side of the mower is a linear section of the blade path oriented perpendicularly to the handle and the normal forward working direction of the mower instead of the apex leading the cutting action in the first cutting orientation.

Since various modifications can be made in my invention as herein above described, and many apparently widely different embodiments of same made, it is intended that all matter contained in the accompanying specification shall be interpreted as illustrative only and not in a limiting sense.

## Claims

1. A belt mower for mowing grass, the belt mower comprising:
a mower deck having a first side and a second side which is different in configuration from the first side;
a mower belt forming an endless loop and supporting a plurality of cutting elements thereon such that the cutting elements extend transversely outwardly from a common outer side of the belt;
a belt drive assembly including a plurality of pulleys rotatably supported on the bottom side of the mower deck and supporting the mower belt thereon such that the mower belt follows a belt path;
a motor coupled to the belt drive assembly to drive rotation of the belt such that the cutting elements effect a cutting action upon the grass;
an operator handle extending rearwardly from the mower deck in a handle direction at an upward inclination from a bottom end of the operator handle coupled to the mower deck to a top end of the operator handle for gripping in hands of an operator;
the belt path including (i) a first cutting section extending along the first side of the mower deck, and (ii) a second cutting section extending along the second side of the mower deck such that the first and second cutting sections have a different cutting configuration; and
the operator handle being pivotal relative to the mower deck about a handle axis between a first cutting orientation in which the first cutting section is opposite from the operator handle and a second cutting orientation in which the second cutting section is opposite from the operator handle.

2. The mower according to claim 1 wherein the first side and the second side of the mower deck have different widths and define different cutting width of the mower in the first and second cutting orientations respectively.

3. The mower according to either one of claims 1 or 2 wherein the handle axis about which the operator handle is pivotal between the first and second cutting orientations is an upright axis.

4. The mower according to any one of claims 1 through 3 wherein the first side of the mower deck and a corresponding portion of the belt path along the first side of the mower deck comprise a first forward cutting section extending along a first portion of a first side of the mower deck and a second forward cutting section extending along a second portion of the first side of the mower deck in which the first and second forward cutting sections are linear and meet one another at apex defining an acute interior angle between the first and second forward cutting sections, and wherein the second side of the mower deck is generally linear such that the belt path is generally triangular in shape.

5. The belt mower according to any one of claims 1 through 4 further comprising:
the first side of the mower deck defines a maximum overall width of the mower deck in the first cutting orientation and the second side of the mower deck is oriented transversely to the first side so as to define a second overall width of the mower deck in the second cutting orientation which is less than the maximum overall width;
the belt path including (i) a wide cutting section extending along the first side of the mower deck in which the cutting elements effect the cutting action along the wide cutting section, and (ii) a narrow cutting section extending along the second side of the mower deck in which the cutting elements effect the cutting action along the narrow cutting section; and
the handle axis comprising an upright axis such that the handle is pivotal between a wide cutting orientation corresponding to the first cutting orientation in which the operator handle is diametrically opposed from the first cutting section that defines a wide cutting section of the belt path and a narrow cutting orientation corresponding to the second cutting orientation in which the operator handle is diametrically opposed from the second cutting section defining a narrow cutting section of the belt path.

6. The mower according to claim 5 wherein the first side and the second side of the mower deck are perpendicular relative to one another and adjacent to one another such that the operator handle is rotated about the handle axis through 90 degrees between the wide cutting orientation and the narrow cutting orientation.

7. The mower according to any one of claims 3 through 6 wherein the motor includes a rotary output coupled to the belt drive assembly which is rotatable about the upright handle axis about which the operator handle is pivoted and the motor is pivotal together with the operator handle relative to the mower deck between the first cutting orientation and the second cutting orientation.

8. The mower according to any one of claims 3 through 7 further comprising a plurality of auxiliary wheels coupled to the operator handle outside of a perimeter defined by the belt path such that the mower deck is pivotal about the upright axis relative to both the auxiliary wheels and the operator handle between the first and second cutting orientations.

9. The mower according to claim 8 further comprising a latching mechanism associated with each auxiliary wheel which is operable between a latched position in which the auxiliary wheel is supported for rolling movement in the handle direction and an unlatched position in which the auxiliary wheel is freely pivotal about a respective upright wheel axis for rotation in any direction.

10. The mower according to any one of claims 1 through 9 further comprising a guard member supported on the mower deck for pivotal movement between a guard position protruding laterally outwardly from the mower deck overtop of one of the sections of the belt path such that the cutting elements along said one of the sections of the belt path are recessed inwardly relative to an outer edge of the guard member and a deflected position in which the guard member is displaced inwardly relative to the guard position such that the cutting elements along said one of the sections of the belt path protrude outwardly beyond the outer edge of the guard member.

11. The mower according to any one of claims 1 through 10 further comprising a second belt forming an endless loop and supporting a plurality of cutting elements thereon, wherein the pulleys of the belt drive assembly support the second belt to follow the belt path of the mower belt in counter rotating relationship to the mower belt.

12. The mower according to any one of claims 1 through 11 wherein the cutting elements are releasably mounted on the mower belt so as to be readily interchangeable.

13. The mower according to any one of claims 1 through 12 wherein each cutting element comprises an elongate filament having a main portion and a weighted portion at a distal end of the main portion farthest from the mower belt which is increased in cross-sectional dimension relative to the main portion.

14. The mower according to any one of claims 1 through 13 further comprising a guard member protruding laterally outwardly from the mower deck overtop of one of the sections of the belt path such that the cutting elements along said one of the sections of the belt path are recessed inwardly relative to an outer edge of the guard member, the guard member including a plurality of elongate slots formed therein which are oriented transversely to the belt path and which are open to the outer edge of the guard member.

15. The mower according to any one of claims 1 through 14 further comprising a plurality of deck wheels coupled to the mower deck within a perimeter defined by the belt path and supporting the mower deck for rolling movement along the ground in which the wheels are multidirectional to allow for movement in any direction and in which the belt cutting path extends about a perimeter of the mower deck for cutting in both forward and either lateral direction of the mower.
